# EUROPEAN PATENT APPLICATION

(11) **EP 3 000 556 A1**
(43) Date of publication of application: **30.03.2016**
(21) Application number: 15186106.9
(22) Date of filing: 21.09.2015
(51) Int. Cl.: B23P 15/00, B23K 20/02, F01D 5/30, F01D 5/34, F01D 5/22

(54) **SHROUDED BONDED TURBINE ROTORS AND METHODS FOR MANUFACTURING THE SAME**

(30) Priority: 24.09.2014 US 201414495319
(71) Applicant: Honeywell International Inc., Morris Plains, NJ 07950 (US)
(72) Inventor: KAHRS, Michael, Morris Plains, NJ New Jersey 07950 (US); VANDER HOEK, Timothy, Morris Plains, NJ New Jersey 07962-2245 (US); BEDROSYAN, Loris, Morris Plains, NJ New Jersey 07950 (US); SMOKE, Jason, Morris Plains, NJ New Jersey 07950 (US); RIAHI, Ardeshir, Morris Plains, NJ New Jersey 07950 (US); CRITES, Daniel C., Morris Plains, NJ New Jersey 07950 (US)
(74) Representative: Houghton, Mark Phillip

(57) **Abstract**

Methods are provided for manufacturing a shrouded bonded turbine rotor. A shrouded blade ring is formed. The shrouded blade ring is formed by bonding a unitary shroud ring to an assembled blade ring or assembling a plurality of shrouded turbine blade segments. The shrouded blade ring is bonded to a hub. The shrouded bonded turbine rotors are also provided. The shrouded bonded turbine rotor comprises a shrouded blade ring and a shroud. The shrouded blade ring comprises a plurality of turbine blade segments and a shroud. Each turbine blade segment comprises an airfoil portion including an airfoil having a root and a tip. The shroud covers the tip of each airfoil in the shrouded blade ring. A hub is bonded with the shrouded blade ring.

## Description

### TECHNICAL FIELD

The present invention generally relates to gas turbine engines, and more particularly relates to shrouded bonded turbine rotors and methods for manufacturing the same.

### BACKGROUND

Aircraft gas turbine engines including auxiliary power units (APUs) and main propulsion engines may incorporate dual alloy turbine (DAT) rotors. A conventional dual alloy turbine rotor comprises a blade ring made of a first alloy having a desired characteristic and a hub of a second alloy having another different desired characteristic. For example, hubs have been formed from alloys that have high tensile strength and low-cycle fatigue resistance. Blade rings that are exposed to the higher temperatures of the combustion gas path and higher centrifugal loads have been integrally cast as one piece (hereinafter a "unitary blade ring") from equi-axed alloys that have high stress rupture and creep resistance. The hub is fabricated separately from the blade ring. Hot isostatic pressing (HIP) facilitates diffusion bonding of the two dissimilar alloy components (the blade ring and the hub) to form the dual alloy turbine rotor.

In addition, as demand for greater fuel efficiency and higher power density increases, so does the need for higher component efficiencies. Turbine efficiency is very sensitive to rotor tip clearance, especially for high overall pressure ratio (OPR) gas turbine engines. High OPR gas turbine engines include high-pressure turbines with low corrected flows and small blade span heights, resulting in excessive tip clearance losses. One of the techniques to reduce these losses is to shroud the turbine blades in the turbine rotor of the high-pressure (HP) turbine. Turbine rotors used in high-pressure (HP) turbines typically have reduced blade solidity (blade count) for a variety of reasons, resulting in a greater pitch-wise distance between the turbine blades, creating higher bending stresses at the interface between the turbine blade airfoils and a shroud. Such bending stresses are aggravated by the fact that HP turbines normally operate at high rotational speeds and temperatures (e.g., greater than 1700 feet/second tip speed and greater than 1500°Fahrenheit

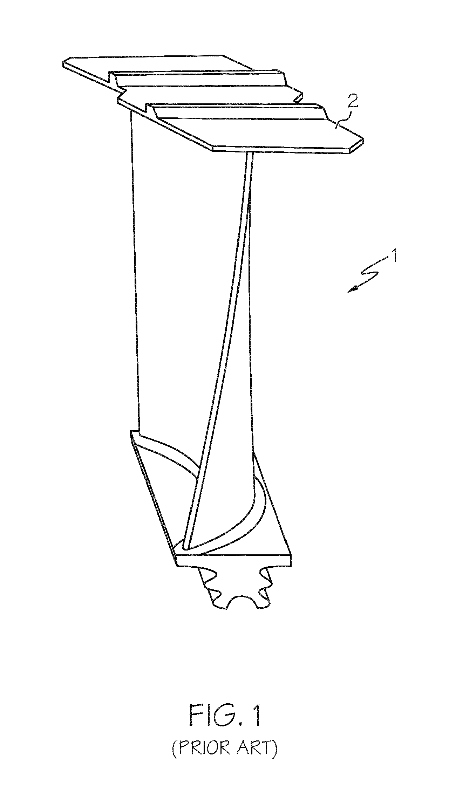

(°F) metal temperature), resulting in reduced fatigue life and burst problems. As such, turbine rotors used in high-pressure turbines are not amenable to the tip-shrouded turbine blades of conventional turbine rotors used in low-pressure (LP) turbines. Such turbine rotors typically have higher blade counts (i.e., higher solidity) and lower rotational speed and temperature (relative to turbine rotors of HP turbines). For example, as depicted in FIG. 1, a tip-shrouded turbine blade segment 1 of a conventional turbine rotor used in a low-pressure turbine may include an integrally-formed overhung shroud segment 2. The overhung shroud segments 2 in the conventional turbine rotor used in the low-pressure turbine are circumferentially discontinuous (not shown). As a result, bending stress of the overhung shroud segment 2 on the airfoil tip of the tip-shrouded turbine blade segment 1 in the conventional turbine rotor may occur and there may be excessive leakage between the overhung shroud segments 2 when used in a high-pressure turbine. Tip-shrouded turbine blades that are integrally cast as a full ring in the conventional dual alloy turbine rotor as previously described are also not particularly amenable to use in a high-pressure turbine rotor, being limited to the lower strength and lower temperature-capable equi-axed alloys (i.e., equi-axed alloys (e.g., MAR-M-247® alloy) have lower strength at elevated temperatures (relative to the strength at elevated temperatures of single crystal and directionally solidified alloys)) .

Hence, there is a need for shrouded bonded turbine rotors and methods for manufacturing the same. There is also a need for single crystal and directionally solidified shrouded blade rings of dual alloy turbine rotors that may be used in high-pressure turbines, at high rotational speeds and temperatures, without incurring bending stress and excessive tip clearance losses and with greater fuel efficiency and higher power density relative to shrouded blade rings of conventional dual alloy turbine rotors.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

Methods are provided for manufacturing a shrouded bonded turbine rotor. In accordance with one exemplary embodiment, a shrouded blade ring is formed. The shrouded blade ring is formed by bonding a unitary shroud ring to an assembled blade ring or assembling a plurality of shrouded turbine blade segments. The shrouded blade ring is bonded to a hub.

Methods are provided for manufacturing a shrouded bonded turbine rotor in accordance with yet another exemplary embodiment of the present invention. The method comprises bonding a plurality of shrouded turbine blade segments into a shrouded blade ring. Each shrouded turbine blade segment comprises a single crystal or directionally solidified alloy. A hub is positioned within the shrouded blade ring. The shrouded blade ring is bonded with the hub.

Shrouded bonded turbine rotors are provided in accordance with yet another exemplary embodiment of the present invention. The shrouded bonded turbine rotor comprises a shrouded blade ring and a shroud. The shrouded blade ring comprises a plurality of turbine blade segments and a shroud. Each turbine blade segment comprises an airfoil portion including an airfoil having a root and a tip. The shroud covers the tip of each airfoil in the shrouded blade ring. A hub is bonded with the shrouded blade ring.

Furthermore, other desirable features and characteristics of the shrouded bonded turbine rotors and methods for manufacturing the same will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 is a perspective view of an exemplary insertable tip-shrouded turbine blade segment of a conventional turbine rotor suitable for use in a low pressure turbine;
FIG. 2 is a perspective view of a shrouded bonded turbine rotor manufactured according to exemplary embodiments of the present invention as described herein;
FIG. 3 is a flow chart of a method for manufacturing a shrouded bonded turbine rotor, according to exemplary embodiments of the present invention;
FIG. 4 is a perspective view of a plurality of turbine blade segments (unshrouded) according to exemplary embodiments of the present invention;
FIG. 5 is a perspective view of one of the turbine blade segments (unshrouded) of FIG. 4 according to exemplary embodiments of the present invention;
FIG. 6 is a perspective view of an assembled blade ring formed from the plurality of turbine blade segments of FIGS. 4 and 5 according to exemplary embodiments of the present invention;
FIG. 7 is a perspective view of a unitary shroud ring according to exemplary embodiments of the present invention;
FIG. 8 is a perspective view of a shrouded blade ring according to exemplary embodiments of the present invention;
FIG. 9 is a cross-sectional view of the shrouded blade ring of FIG. 8 including the unitary shroud ring of FIG. 7 press fit onto the assembled blade ring of FIG. 6 positioned on a hub (but prior to bonding therewith);
FIG. 10 is a flow chart of a method for manufacturing a shrouded bonded turbine rotor, according to the alternative exemplary embodiment of the present invention;
FIG. 11 is a perspective view of a shrouded turbine blade segment according to an alternative exemplary embodiment of the present invention, the shrouded turbine blade segment including the turbine blade segment of FIG. 5 connected to a shroud segment;
FIG. 12 is a top view of the shrouded turbine blade segment of FIG. 11;
FIG. 13 is a close-up enlarged view of the upper portion of the shrouded turbine blade segment of FIGS. 11 and 12; and
FIG. 14 is a perspective view of a shrouded blade ring according to the alternative exemplary embodiment of the present invention; and
FIG. 15 is a perspective view of a shrouded bonded turbine rotor manufactured according to the alternative exemplary embodiments of the present invention as described herein.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

Various embodiments are directed to shrouded bonded turbine rotors and methods for manufacturing the same. The shrouded bonded turbine rotors according to exemplary embodiments advantageously enable the use of single crystal and directionally-solidified alloys for forming a shrouded blade ring of the shrouded dual ally turbine rotor. The shrouded bonded turbine rotors may be used in high-pressure turbines that operate at high rotational speeds and temperatures (e.g., greater than 1700 feet/second tip speed and greater than 1500°Fahrenheit (°F) metal temperature), without incurring bending stress and excessive tip clearance losses, resulting in greater fuel efficiency and higher power density. The shrouded bonded turbine rotors according to exemplary embodiments may be used in cooled and uncooled applications.

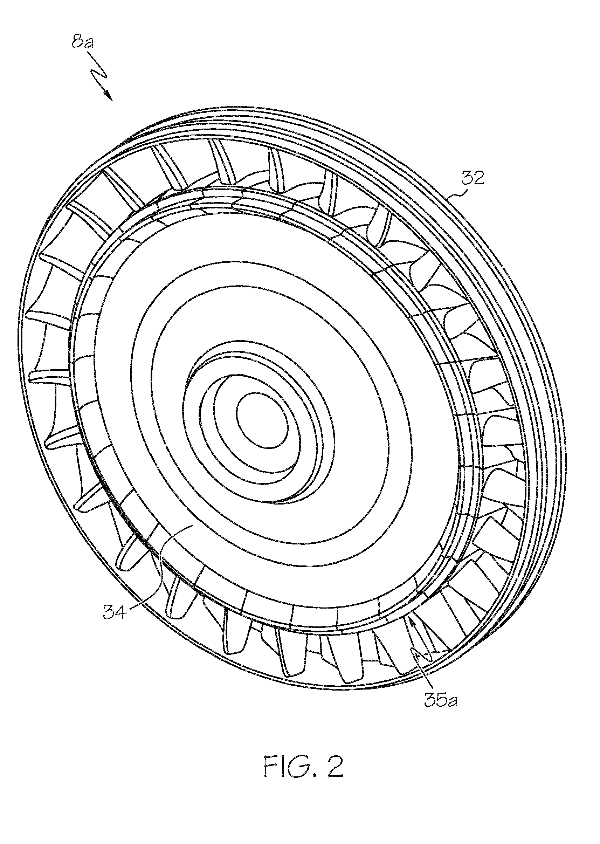

Referring now to FIG. 2, a shrouded bonded turbine rotor 8a in accordance with exemplary embodiments of the present invention is depicted. The shrouded bonded turbine rotor 8a comprises a shrouded blade ring 35a comprised of a plurality of turbine blade segments 10 and a shroud covering a tip 28 of each airfoil 16 in the shrouded blade ring 35a. The turbine blade segments 10 comprise a single crystal alloy or a directionally solidified alloy. The shroud comprises one of a unitary shroud ring 32 or a plurality of (assembled and bonded) shroud segments 36 as hereinafter described. The shrouded bonded turbine rotor 8a further comprises a hub 34 bonded to the shrouded blade ring 35a. The hub 34 may be comprised of an equi-axed alloy.

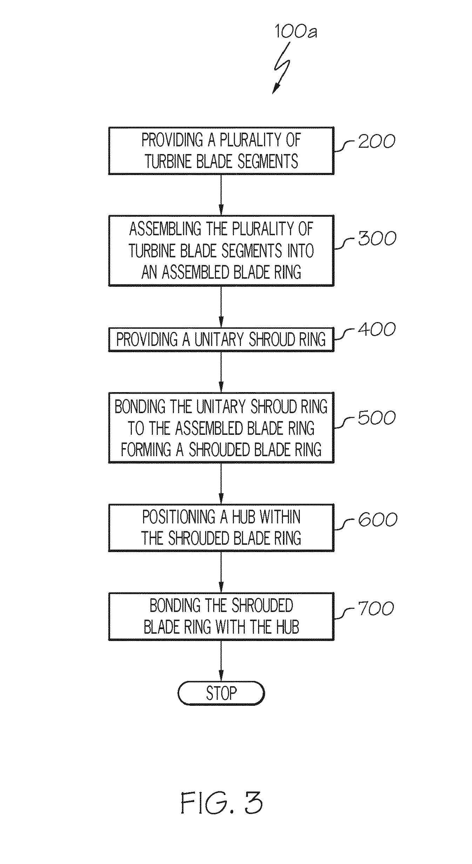

Referring now to FIGS. 3 through 5, in accordance with exemplary embodiments of the present invention, a method 100a for manufacturing the shrouded bonded turbine rotor 8a (FIG. 2) begins by providing the plurality of turbine blade segments 10 (step 200). Each of the turbine blade segments 10 comprises the airfoil portion 12 that protrudes outwardly from the shank portion 14. A blade platform 13 may be disposed between the airfoil portion 12 and the shank portion 14. The turbine blade segments 10 are unshrouded. The airfoil portion 12 of each turbine blade segment 10 comprises the airfoil 16 having leading and trailing edges 18 and 20, pressure and suction sides 22 and 24, and a root 26 and the tip 28.

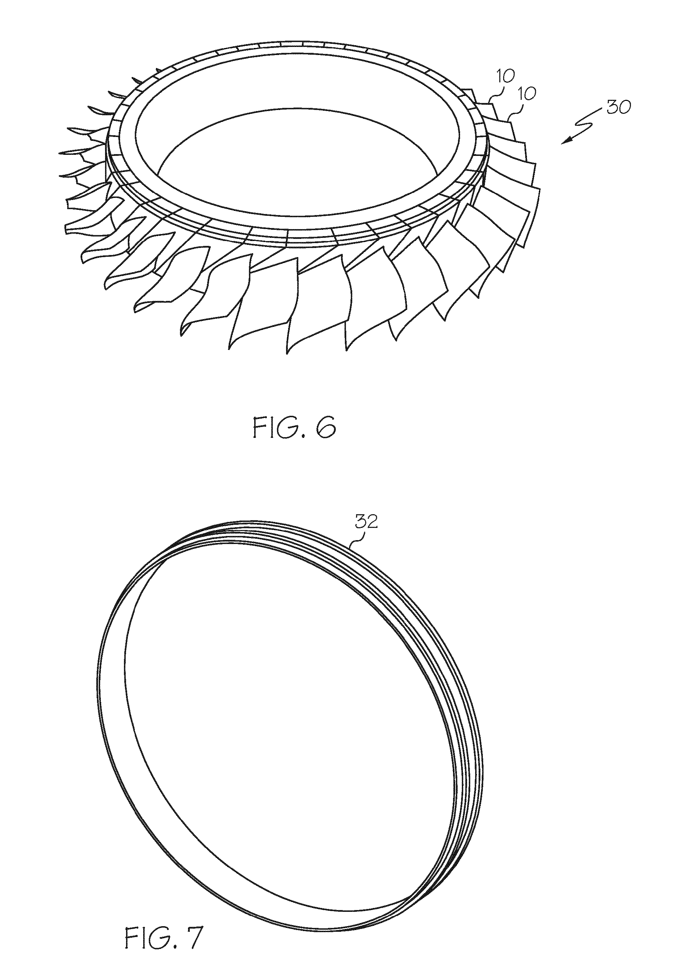

Still referring to FIGS. 3 through 5 and now to FIG. 6, in accordance with exemplary embodiments of the present invention, the method 100a for manufacturing a shrouded bonded turbine rotor continues by assembling the plurality of turbine blade segments 10 into an assembled blade ring 30 (step 300). The turbine blade segments 10 are assembled by arranging them in a full circumferential ring such that the shank portion of circumferentially adjacent turbine blade segments abut each other. The assembled turbine blade segments 10 may be bonded together (by transient liquid phase bonding or the like) into the assembled blade ring 30 in step 300 or simultaneously with the step of bonding the unitary shroud ring 32 to the assembled blade ring 30 (step 500) as hereinafter described.

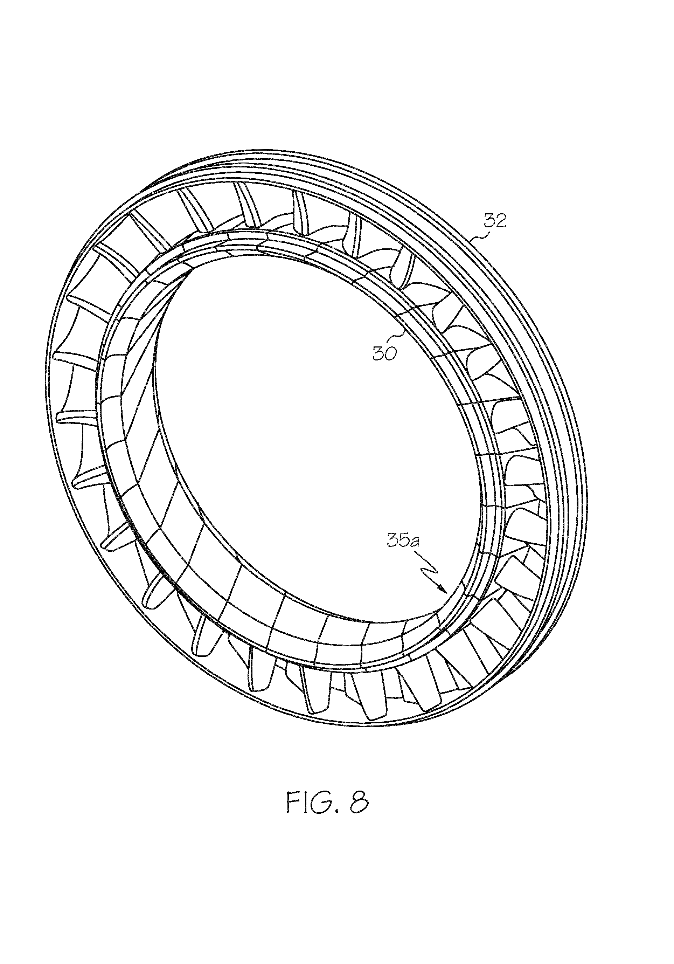

Still referring to FIG. 3 and now to FIGS. 7 through 9, in accordance with exemplary embodiments of the present invention, the method 100a for manufacturing a shrouded bonded turbine rotor continues by providing a unitary shroud ring 32 (step 400). The unitary shroud ring is a full circumferential shroud and may be formed with an equi-axed alloy such as Mar-M-247® alloy or the like. The unitary shroud ring comprises an inner surface 41 that is configured to face the airfoil tips and an outer surface 43 configured to face away from the airfoil tips. The outer surface may include flow discouragers 50 as known in the art (see, e.g., FIG. 8). Step 400 does not have to follow step 200 and/or step 300 in chronological order, and may be performed essentially simultaneously, or at any time prior to step 500.

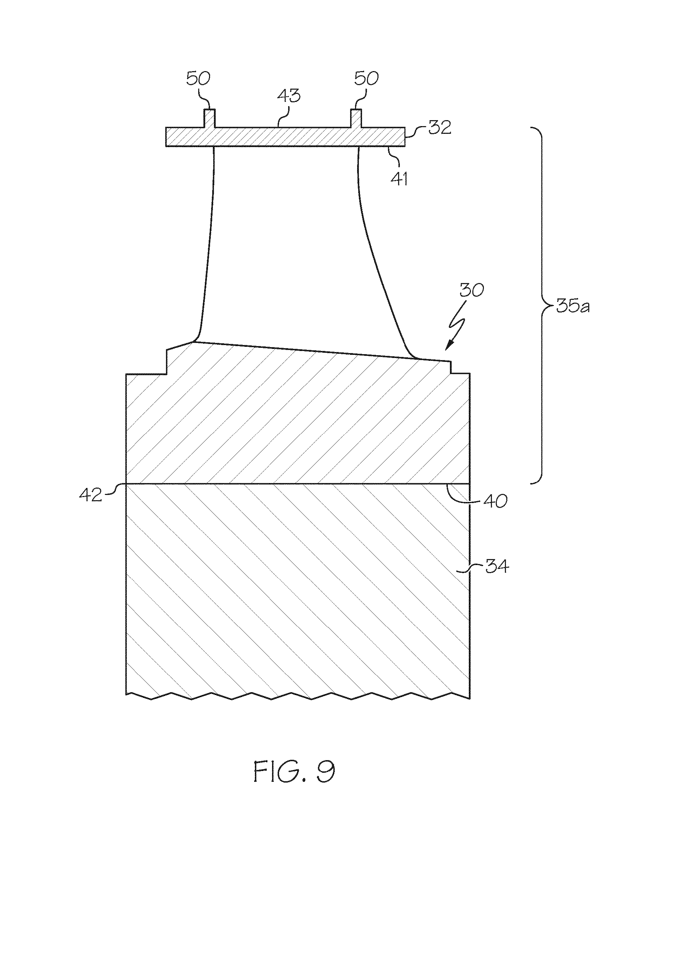

Still referring to FIG. 3, and FIGS. 7 through 9, in accordance with exemplary embodiments of the present invention, the method 100a for manufacturing a shrouded bonded turbine rotor continues by bonding the unitary shroud ring 32 to the assembled blade ring 30 (step 500), thereby forming the shrouded blade ring 35a (e.g., FIG. 8). As noted previously, steps 300 and 500 may be performed substantially simultaneously in a single heating cycle to bond the assembled turbine blade segments 10 to each other and the unitary shroud ring 32 to the assembled blade ring 30. The turbine blade segments may be bonded to each other and the unitary blade ring 32 may be press fit and bonded to the assembled blade ring 30 by, for example, by diffusion bonding, or by using transient liquid phase bonding as known to one skilled in the art. In transient liquid phase bonding, a transient liquid phase material is deposited on the bonding surface(s) of the unitary shroud ring, the turbine blade segments, the assembled blade ring, and combinations thereof. The unitary shroud ring inner surface comprises the bonding surface of the unitary shroud ring. The airfoil tips comprise the bonding surface(s) of the assembled blade ring. The bonding surfaces of the turbine blade segment 10 include side faces of the shank portion of adjacent turbine blade segments 10. The transient liquid phase material includes a melting point depressant and is formulated to melt at a temperature below the incipient melting temperature of the single crystal or directionally solidified alloy material making up the assembled blade ring 30. The transient liquid phase material is applied to the bonding surface(s), such as by sputtering or as a superalloy foil including the transient liquid phase material. The unitary shroud ring 32 and assembled blade ring 30 are then loaded into a tooling, such as a thermal expansion tooling. Heat is then applied to the unitary shroud ring and/or the assembled blade ring to thereby melt the depressant. In particular, the melting point depressant in the transient liquid phase material diffuses out of the liquid phase into the adjacent single crystal or directionally solidified material of the assembled blade ring to thereby raise the melting temperature of the bonded joint. FIG. 9 depicts the unitary shroud ring 32 press fit onto the assembled blade ring 30 of FIG. 6 prior to bonding the unitary shroud ring with the assembled blade ring (and prior to bonding the shrouded blade ring with the hub as hereinafter described). Subsequent bonding of the shrouded blade ring 35a to the hub by hot isostatic pressing as hereinafter described (step 700) may improve the level of diffusion and strength of the bond between the unitary shroud ring 32 and the assembled blade ring 30.

Referring again to FIG. 3, in accordance with exemplary embodiments of the present invention, the method 100a for manufacturing a shrouded bonded turbine rotor continues by positioning the hub 34 within the shrouded blade ring 35a (step 600). The shrouded blade ring 35a includes an inner annular surface 40. The hub 34 is disposed within the shrouded blade ring 35a and has an outer peripheral surface 42 flush against the inner annular surface 40 of the shrouded blade ring 35a (see, e.g., FIGS. 2 and 9). Steps 300, 500, and 600 may be performed substantially simultaneously in a single heating cycle. The hub 34 may be formed by a conventional process, such as by powder metallurgy or by forging. In an embodiment, the hub comprises an alloy material that is different from the alloy material from which the blade ring is made. For example, the hub 34 may be made of a nickel-based alloy formulated to withstand higher stresses and temperatures lower than those to which the blade ring will be subjected. In this regard, the hub may be made of an equi-axed alloy material, which may be formed from Astroloy, or U720, to name a few. It is to be understood that the unitary shroud ring 32 and the hub 34 may each be made of the same or different equi-axed alloys with the assembled blade ring 30 comprising the single crystal or directionally solidified alloy (i.e., a shrouded dual alloy or triple alloy bonded turbine rotor).

Still referring to FIG. 3, in accordance with exemplary embodiments of the present invention, the method 100a for manufacturing a shrouded bonded turbine rotor continues by bonding the shrouded blade ring 35a (FIG. 8) with the hub (step 700). An inner diameter of the shrouded blade ring may be machined to a particular dimension before being bonded to the hub 34, and the outer peripheral surface 42 of the hub may be machined to a particular dimension to improve bonding to the shrouded blade ring. The shrouded blade ring may be bonded to the hub using any one of numerous conventional processes. For example, the shrouded blade ring may be bonded to the hub using heat and pressure. In still another example, the shrouded blade ring may be shrink-fitted to the hub, evacuated and the joined surfaces sealed, and bonding may occur using a hot isostatic pressing process. For example, the hot isostatic pressing process parameters may include pressure, temperature, and time. After bonding, the shrouded bonded turbine rotor may be subjected to a heat treatment. The heat treatment may occur at temperatures below the bonding temperature of the shrouded blade ring and the hub.

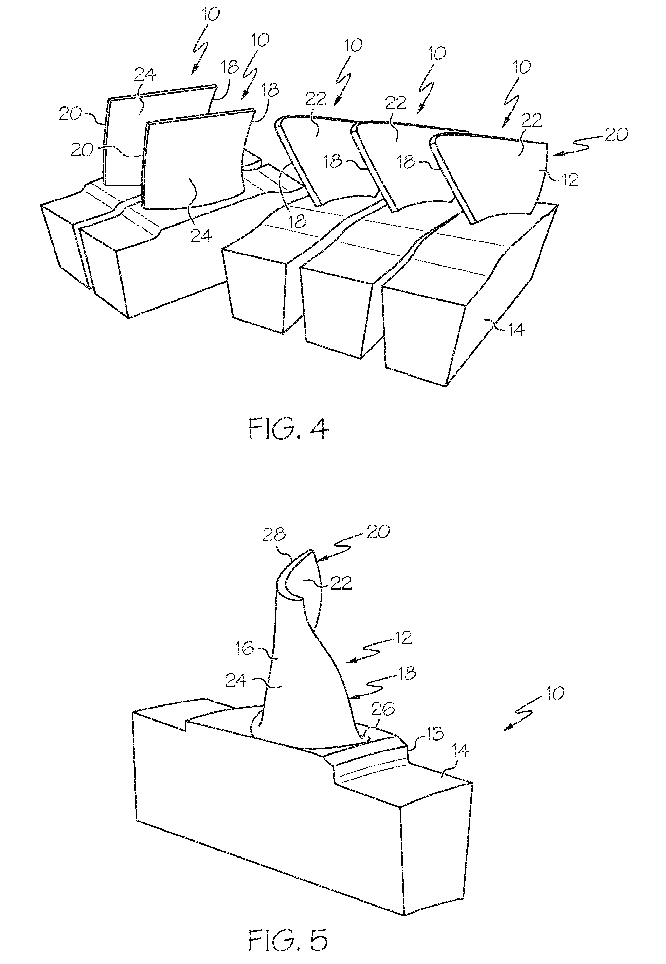

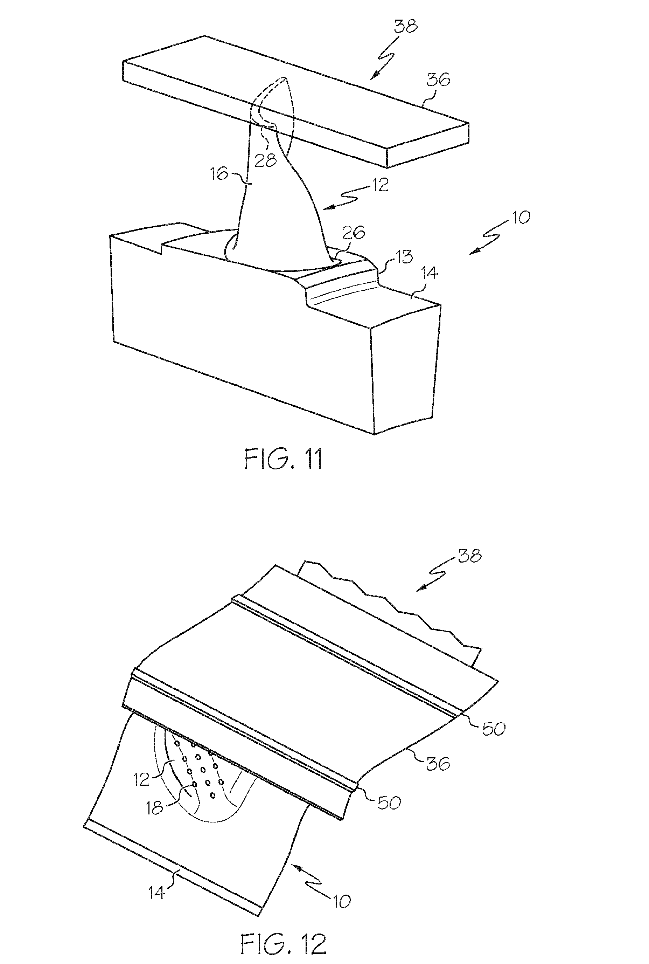

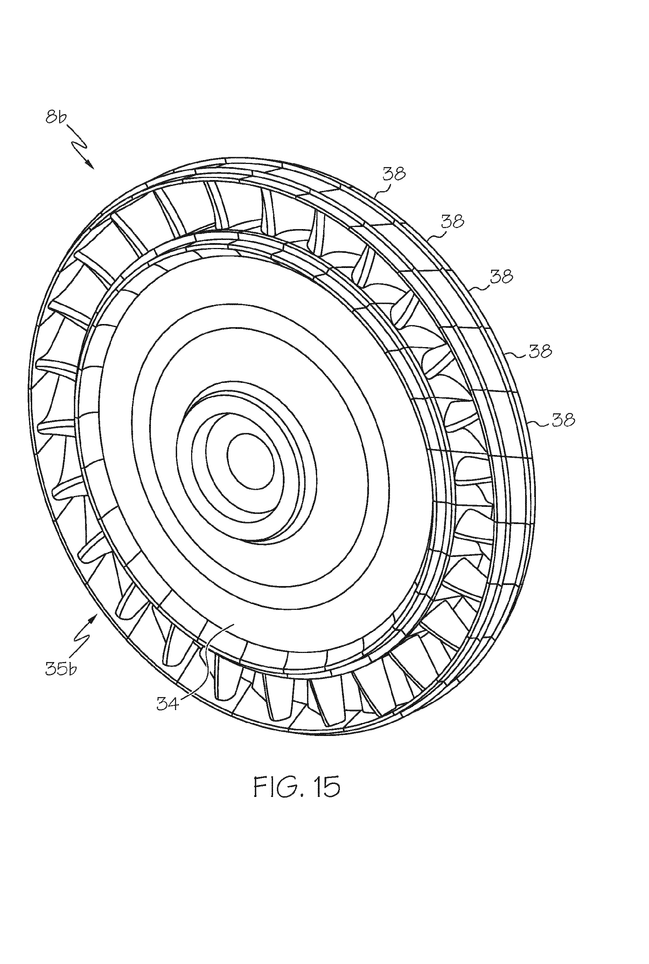

Referring now to FIG. 15, a shrouded bonded turbine rotor 8b in accordance with an alternative embodiment of the present invention is depicted. The shrouded bonded turbine rotor 8b comprises a shrouded blade ring 35b and a hub 34 bonded to the shrouded blade ring 35b. The shrouded blade ring 35b comprises a plurality of (assembled and bonded) shrouded turbine blade segments 38. Each shrouded turbine blade segment 38 comprises the turbine blade segment 10 (FIGS. 4 and 5) connected to a shroud segment 36 (e.g., FIG. 11). A plurality of (assembled and bonded) shroud segments form a full ring shroud covering the tip 28 of each airfoil 16 in the shrouded blade ring 35b. The shrouded turbine blade segments 38 comprise a single crystal alloy or a directionally solidified alloy. The hub 34 may be comprised of an equi-axed alloy.

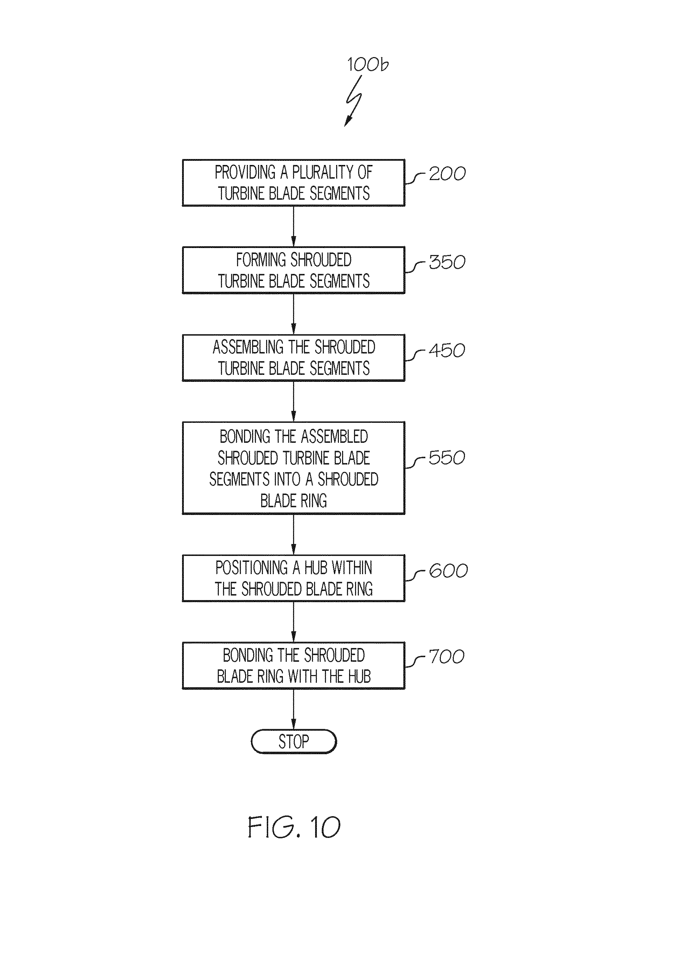

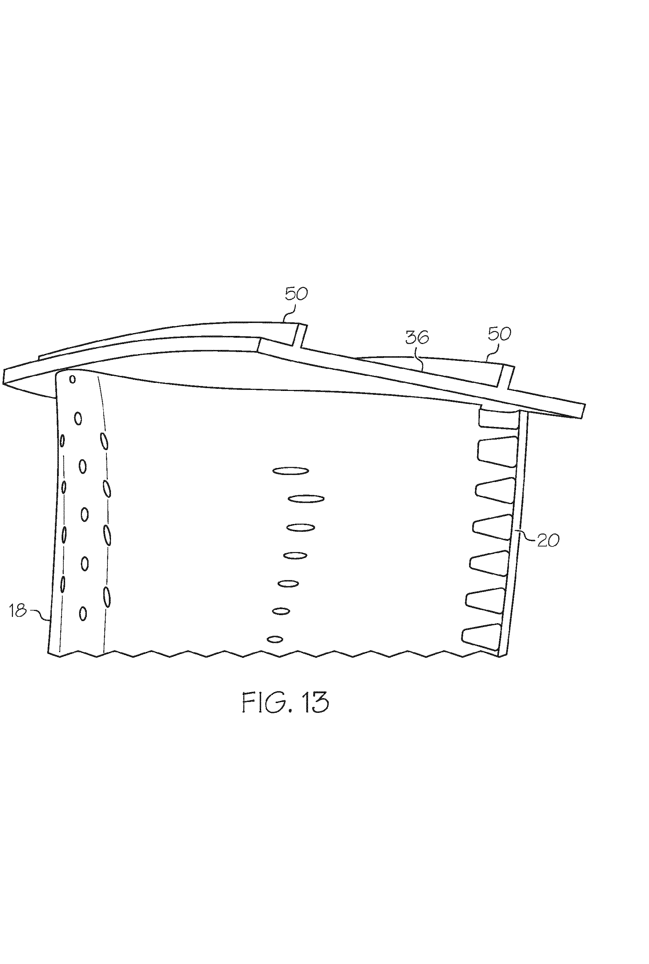

Referring now to FIGS. 10 through 15, in accordance with the alternative embodiment of the present invention, a method 100b for manufacturing the shrouded bonded turbine rotor 8b (FIG. 15) begins by providing the plurality of turbine blade segments 10 (step 200) in the same manner as previously described in connection with method 100a. Next, a plurality of the shrouded turbine blade segments 38 may be formed by connecting each turbine blade segment 10 of the plurality of the turbine blade segments 10 (FIGS. 3 and 4) provided in step 200 to a shroud segment 36 (step 350). Thus, each shrouded turbine blade segment 38 comprises the turbine blade segment 10 connected to a shroud segment 36. Each shrouded turbine blade segment 38 has a substantially I-shaped cross-section as depicted in FIG. 11. The shrouded turbine blade segment 38 may be formed by integrally casting the turbine blade segment 10 with the shroud segment 36, thereby forming a unitary (i.e., one-piece) shrouded turbine blade segment 38. In this case, steps 200 and 350 are performed simultaneously. Alternatively, the shrouded turbine blade segment 38 may be formed by bonding the shroud segment 36 to the tip 28 of the airfoil 16 in the turbine blade segment 10 by brazing or the like. Again, as known in the art, the brazing process itself includes a heat treatment that, in the alternative embodiment, results in bonding the shroud segment 36 to the tip of the airfoil in the turbine blade segment such that no subsequent heat treatment is required in forming the shrouded turbine blade segment.

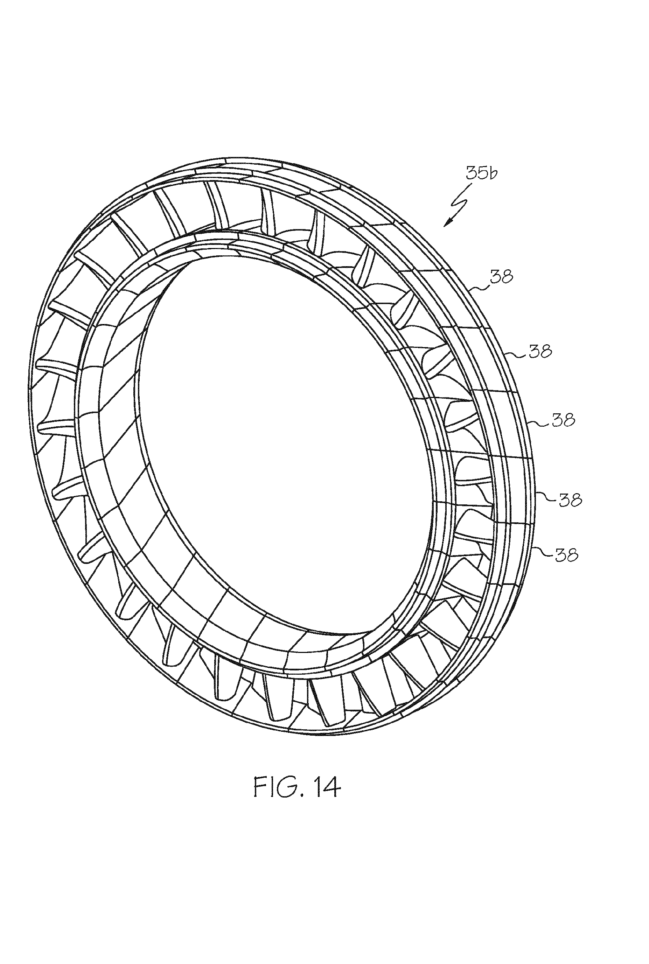

Method 100b for manufacturing the shrouded bonded turbine rotor according to the alternative exemplary embodiment continues by assembling the shrouded blade segments 10 together into a full shroud ring (step 450) and thereafter bonding the plurality of shrouded turbine blade segments (inclusive of unitary shrouded turbine blade segments) together forming the shrouded blade ring 35b (FIG. 14) (step 550). The shrouded blade ring 35b forms a full ring comprising the plurality of shrouded turbine blade segments 38. In an embodiment, the plurality of shrouded turbine blade segments 38 may be bonded together to form the shrouded blade ring 35b by a transient liquid phase bonding process. In one particular example, a transient liquid phase material is deposited on the bonding surfaces of each shrouded turbine blade segment 38. The bonding surfaces of the shrouded turbine blade segment 38 include side faces of the shank portion of adjacent shrouded turbine blade segments 38. As noted previously, the transient liquid phase material includes a melting point depressant and is formulated to melt at a temperature below the incipient melting temperature of the single crystal or directionally solidified alloy material making up the shrouded turbine blade segments. The transient liquid phase material is applied to the bonding surfaces, such as by sputtering or as a superalloy foil including the transient liquid phase material. The shrouded turbine blade segments 38 are then loaded into a tooling, such as a thermal expansion tooling. The tooling may be adapted to place the bonding surfaces of adjacent shrouded turbine blade segments 38 into compression. Heat is then applied to the shrouded turbine blade segments to thereby melt the depressant. In particular, the melting point depressants in the transient liquid phase material diffuse out of the liquid phase into the adjacent single crystal or directionally solidified material to thereby raise the melting temperature of the bonded joint. The thermal expansion tooling compresses the shrouded blade ring 35b of shrouded turbine blade segments 38, which may extrude excess transient liquid phase material from bond joints prior to solidification. The shrouded blade ring 35b may be heated using a furnace or other heating device.

In another embodiment, the shrouded turbine blade segments 38 may be placed in a bonding fixture and bonded together using a known bonding method. In an example, the shrouded turbine blade segments may be bonded together by diffusion bonding with the aid of a differential thermal expansion tooling. The tooling can comprise a low-alpha Molybdenum tooling or another suitable tooling. Conventional brazing cannot be used to bond the shrouded turbine blade segments 38 together because brazing does not produce joints strong enough to withstand the stresses that occur within the turbine rotor.

Method 100b (FIG. 10) for manufacturing the shrouded bonded turbine rotor 8b according to the alternative exemplary embodiment continues by positioning the hub 34 within the shrouded blade ring 35b (step 600) and bonding the shrouded blade ring 35b with the hub 34 (step 700) in the same manner as previously described for method 100a, resulting in the shrouded bonded turbine rotor depicted in FIG. 15.

From the foregoing, it is to be appreciated that shrouded bonded turbine rotors and methods for manufacturing the same are provided. The shrouded bonded turbine rotors manufactured according to exemplary embodiments permit use of single crystal and directionally solidified alloys and may be used in high-pressure turbines that operate at high rotational speeds and temperatures, without bending stress and excessive tip clearance losses and with greater fuel efficiency and higher power density.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for manufacturing a shrouded bonded turbine rotor, the method comprising the steps of:
forming a shrouded blade ring comprising bonding a unitary shroud ring to an assembled blade ring or assembling a plurality of shrouded turbine blade segments; and
bonding the shrouded blade ring to a hub.

2. The method of Claim 1, wherein the step of forming a shrouded blade ring comprises bonding the unitary shroud ring to the assembled blade ring and the method further comprises the step of assembling a plurality of turbine blade segments into the assembled blade ring prior to forming the shrouded blade ring.

3. The method of Claim 1, wherein the step of forming a shrouded blade ring comprising bonding the unitary shroud ring to the assembled blade ring comprises diffusion bonding the unitary shroud ring to the assembled blade ring.

4. The method of Claim 2, wherein the step of assembling a plurality of turbine blade segments and bonding the unitary shroud ring to the assembled blade ring are performed substantially simultaneously.

5. The method of Claim 4, wherein the step of assembling a plurality of turbine blade segments and bonding the unitary shroud ring to the assembled blade ring are performed by compression in a single heating cycle.

6. The method of Claim 2, wherein the step of forming a shrouded blade ring comprises bonding the unitary shroud ring comprising an equi-axed alloy to the assembled blade ring comprising the plurality of turbine blade segments comprising a single crystal or directionally solidified alloy.

7. The method of Claim 1, wherein the step of forming a shrouded blade ring comprises assembling the plurality of shrouded turbine blade segments, the method further comprising the step of forming the plurality of shrouded turbine blade segments prior to assembling the plurality of shrouded turbine blade segments.

8. The method of Claim 7, wherein the step of forming the plurality of shrouded turbine blade segments comprises integrally casting a shroud segment with a turbine blade segment to form a shrouded turbine blade segment of the plurality of shrouded turbine blade segments.

9. The method of Claim 7, wherein the step of forming the plurality of shrouded turbine blade segments comprises bonding a shroud segment to a tip of an airfoil in a turbine blade segment.

10. The method of Claim 1, wherein the step of bonding the shrouded blade ring to the hub comprises hot isostatic pressing of the shrouded blade ring at a hot isostatic pressing temperature and pressure to effect metallurgical bonding of the shrouded blade ring to the hub.

11. A shrouded bonded turbine rotor comprising:
a shrouded blade ring comprising a plurality of turbine blade segments and a shroud, each turbine blade segment comprising an airfoil portion including an airfoil having a root and a tip, the shroud covering the tip of each airfoil in the shrouded blade ring; and
a hub bonded with the shrouded blade ring.

12. The shrouded bonded turbine rotor of Claim 11, wherein the shroud comprises a unitary shroud ring.

13. The shrouded bonded turbine rotor of Claim 11, wherein the shroud comprises a plurality of shroud segments, each shroud segment connected to a corresponding turbine blade segment forming a shrouded turbine blade segment, the shrouded turbine blade segments forming the shrouded blade ring, each shrouded turbine blade segment bonded to circumferentially adjacent shrouded turbine blade segments.

14. The shrouded bonded turbine rotor of Claim 13, wherein the plurality of shroud segments comprise a single crystal alloy or a directionally solidified alloy.

15. The shrouded bonded turbine rotor of Claim 14, wherein each shroud segment of the plurality of shroud segments and the corresponding turbine blade segment are integrally cast from the single crystal alloy or the directionally solidified alloy.
